# EUROPEAN PATENT APPLICATION

(11) **EP 1 215 661 A1**
(43) Date of publication of application: **19.06.2002**
(21) Application number: 00127467.9
(22) Date of filing: 14.12.2000
(51) Int. Cl.: G10L 15/26

(54) **Mobile terminal controllable by spoken utterances**

(71) Applicant: TELEFONAKTIEBOLAGET L M ERICSSON (publ), 126 25 Stockholm (SE)
(72) Inventor: Dobler, Stefan, 91077 Neunkirchen am Brand (DE); Öijer, Fredrik, 23431 Lomma (SE); Hellwig Karl, D- 97539 Wonfurt (DE)
(74) Representative: Schmidt, Steffen J., Dipl.-Ing.

(57) **Abstract**

A mobile terminal (100) which is controllable by spoken utterances like proper names or command words is described. The mobile terminal (100) comprises an interface (200) for receiving from a network server (300) acoustic models for automatic speech recognition and an automatic speech recognizer (110) for recognizing the spoken utterances based on the received acoustic models. The invention further relates to a network server (300) for mobile terminals (100) which are controllable by spoken utterances and to a method for obtaining acoustic models for a mobile terminal (100) controllable by spoken utterances.

## Description

### BACKGROUND OF THE INVENTION

### 1. Technical Field

The invention relates to the field of automatic speech recognition and more particularly to a mobile terminal which is controllable by spoken utterances like proper names and command words. The invention further relates to a method for providing acoustic models for automatic speech recognition in such a mobile terminal.

### 2. Discussion of the Prior Art

Many mobile terminals like mobile telephones or personal digital assistants comprise the feature of controlling one or more functions by means of uttering corresponding keywords. There exist, e. g., mobile telephones which allow the answering of a call or the administration of a telephone book by uttering command words. Moreover, many mobile telephones allow so-called voice dialling which is initiated by uttering a person's name.

Controlling a mobile terminal by spoken utterances necessitates employment of automatic speech recognition. During automatic speech recognition, an automatic speech recognizer compares previously generated acoustic models with a detected spoken utterance. The acoustic models can be generated speaker dependent and speaker independent.

Up to now, most mobile terminals employ speaker dependent speech recognition and thus speaker dependent acoustic models. The use of speaker dependent acoustic models necessitates that an individual user of the mobile terminal has to train a vocabulary based on which automatic speech recognition is performed. The training is usually done by speaking a specific keyword one or several times in order to generate the corresponding speaker dependent acoustic model.

Speech recognition in mobile terminals based on speaker dependent acoustic models is not always an optimal solution. First of all, the requirement of a separate training for each keyword which is to be used for controlling the mobile terminal is time demanding and perceived as cumbersome by the user. Moreover, since the speaker dependent acoustic models are usually stored in the mobile terminal itself, the speaker dependent acoustic models generated by means of a training process are only available for this single mobile terminal. This means that if the user buys a new mobile terminal, the time demanding training process has to be repeated.

Because of the above drawbacks of speaker dependent speech recognition, mobile terminals sometimes employ speaker independent speech recognition, i. e., speech recognition based on speaker independent acoustic models. There exist several possibilities for creating speaker independent acoustic models. If the spoken keywords for controlling the mobile terminal constitute a limited set of command words which are pre-defined, i. e., not defined by the user of the mobile terminal, the speaker independent references may be generated by averaging the spoken utterances of a large number of different speakers and may be stored in the mobile terminal prior to its sale.

On the other hand, if the spoken keywords for controlling the mobile terminal can freely be chosen by the user a different method has to be applied. A computer system for generating speaker independent references for freely chosen spoken keywords, i. e., keywords that are not known to the computer system, is described in EP 0 590 173 A1. The computer system analyzes each unknown spoken keyword and synthesizes a corresponding speaker independent reference by means of a phonetic database. However, the computer system taught in EP 0 590 173 A1 comprises a huge memory and sophisticated computational resources for generating the speaker independent references that are generally not available in small and light-weight mobile terminals.

There exists, therefore, a need for a mobile terminal which is controllable by freely chosen spoken keywords based on speaker independent or speaker dependent acoustic models and which necessitates a minimum of user training in case speaker dependent acoustic models are employed. There further exists a need for a network server for such a mobile terminal and for a method for obtaining acoustic models for such a mobile terminal.

### SUMMARY OF THE INVENTION

The present invention satisfies this need by providing a mobile terminal which is controllable by spoken utterances like a proper name or a command word and which comprises an interface for receiving from a network server acoustic models which correspond to the spoken utterances and an automatic speech recognizer for recognizing the spoken utterances based on the received acoustic models.

A network server according to the invention for mobile terminals which are controllable by spoken utterances comprises a unit for providing acoustic models for automatic recognition of the spoken utterances and an interface for transmitting the acoustic models to the mobile terminals.

According to the invention, the acoustic models for automatic speech recognition in a mobile terminal which is controllable by spoken utterances are provided by the network server. The acoustic models are then transmitted from the network server to the mobile terminal and the mobile terminal automatically recognizes the spoken utterances based on the acoustic models transmitted by the network server. The terminal's and the network server's interfaces can be configured as one or more additional hardware components or as a software solution for operating already existing hardware components.

As becomes apparent from the above, the acoustic models are provided centrally and for a plurality of mobile terminals by a single network server. The acoustic models provided by the network server can be both speaker dependent and speaker independent. The network server may provide the acoustic models e.g. by storing the acoustic models to be downloaded by the mobile terminal in a network server database or by generating the acoustic models to be downloaded on demand.

In case of speaker independent acoustic models, the computational and memory resources required for generating the speaker independent acoustic models are located on the side of the network server and shared by a plurality of mobile terminals. Consequently, mobile terminals can be controlled by freely chosen spoken utterances and based on speaker independent speech recognition without a significant increase of the hardware requirements for the mobile terminals. Moreover, the mobile terminals themselves can be kept language independent and country independent since any language dependent resources necessitated by speaker independent voice recognition can be transferred from the mobile terminal to the network server. Additionally, since speaker independent voice recognition is used, the mobile terminal requires no user training prior to controlling the mobile terminal by spoken utterances.

In case speaker dependent acoustic models are used, the speaker dependent acoustic models need only be trained once and can then be stored on the network server. Consequently, the speaker dependent acoustic models can be transmitted from the network server to any mobile terminal a user intends to control by spoken utterances. If, e.g., the user buys a new mobile terminal, no further training is required to control this new mobile terminal by spoken utterances. The user merely needs to e.g. load the speaker dependent acoustic models from his old mobile terminal to the network server and to subsequently re-load these acoustic models from the network server into the new mobile terminal. Of course, this also works with speaker independent acoustic models.

The invention, therefore, allows to reduce the computational requirements of mobile terminals if speaker independent acoustic models are used for automatic speech recognition. If speaker dependent acoustic models are used for automatic speech recognition, only a single training process may be used in order to control a plurality of mobile terminals by automatic speech recognition.

Preferably, speaker independent acoustic models are generated based on textual transcriptions (e.g. in the ASCII format) of the spoken utterances. The textual transcriptions of the spoken utterances may be contained in a database for textual transcriptions within the mobile terminal. The interface of the mobile terminal can be configured such that it allows to transmit the textual transcriptions from the mobile terminal to the network server. The interface of the network server on the other hand can be configured such that it allows to receive the textual transcriptions from the mobile terminal. After receipt of the textual transcriptions from the mobile terminal, the unit for providing acoustic models within the network server can generate speaker independent acoustic models based on the received textual transcriptions.

Also, the interface of the mobile terminal can be configured such that it allows to transmit speaker dependent or speaker independent acoustic models of the spoken utterances to the network server. The interface of the network server, on the other hand can be configured such that it allows to receive the acoustic models from the mobile terminal. After receipt of the acoustic models from the mobile terminal, the unit for providing acoustic models of the network server can store the received acoustic models permanently or temporarily. The unit for providing acoustic models may thus be a memory. After the acoustic models have been stored in the network server, the acoustic models may be transferred from the network server to the mobile terminal from which the acoustic models have been received or to a further mobile terminal. Transmitting the acoustic models back to the mobile terminal from which the acoustic models have been transmitted is advantageous if e.g. the acoustic models have been erroneously deleted. Thus, the network server may be used as a backup means. As an example, the network server may perform a backup of the acoustic models or further information like voice prompts stored in the mobile terminal in certain time intervals.

As pointed out above, the mobile terminal may comprise a database for storing textual transcriptions of the spoken utterances. The textual transcriptions can be input by the user, e. g. by means of keys of the mobile terminal. This may be done in context with the creation of entries for a personal telephone book or of command words. However, the textual transcriptions can also be pre-defined and pre-stored prior to the sale of the mobile terminal. Predefined textual transcriptions may e. g. relate to specific command words.

Besides the database for the textual transcriptions, the mobile terminal can comprise an acoustic model database for storing acoustic models generated within the mobile terminal or received from the network server. Preferably, both databases are configured such that for each pair of textual transcription and corresponding acoustic model there exists a link between the textual transcription and the corresponding acoustic model. The link can be configured as identical indices i = 1...n within the respective database.

According to a preferred embodiment of the invention, acoustic models are generated by the network server based on phonetic transcriptions of the textual transcriptions. The phonetic transcriptions are e. g. created with the help of a pronunciation database which constitutes the network server's vocabulary of phonetic transcription units like phonemes or triphons. Single phonetic transcription units are concatenated to form the phonetic transcription of a specific textual transcription. In a further step, the speaker independent or speaker dependent acoustic models may be generated by translating the phonetic transcription units into the corresponding speaker independent or speaker dependent phonetic recognition units which are in a format that can be analyzed by the automatic speech recognizer of the mobile terminal. The network server's vocabulary of phonetic recognition units may be stored in a recognition database of the network server.

The network server can further comprise a speech synthesizer for generating a voice prompt of a textual transcription received from a mobile terminal. Preferably, the voice prompt is generated using the same phonetic transcription which is used to build a corresponding acoustic model. Therefore, the pronunciation database can be shared by both the speech synthesizer and the unit for generating the speaker independent acoustic model.

The voice prompt can be generated by translating the textual transcription into phonetic synthesizing units. The network server's vocabulary of phonetic synthesizing units may e. g. be contained in a synthesis database of the network server.

After generation of the voice prompt corresponding to a textual transcription, the voice prompt may be transmitted from the network server to the mobile terminal and may be received from the mobile terminal via its interface. The voice prompt received from the network server may then be stored in a voice prompt database of the mobile terminal.

Instead of or additionally to generating a voice prompt within the network server, a recognized user utterance may also form the basis for a voice prompt. Consequently, the voice prompt can be generated within the mobile terminal using the recognized user utterance. Thus the speech synthesizer and the synthesis database of the network server can be omitted and the complexity and the cost of the network server can be considerably decreased.

The interface of the mobile terminal can be configured such that it allows to transmit voice prompts from the mobile terminal to the network server and to receive voice prompts from the network server. The interface of the network server, on the other hand, can be configured such that it allows to receive voice prompts from the mobile terminal and to transmit voice prompts to the mobile terminal. Preferably, the network server further comprises a voice prompt database for storing the voice prompts permanently or temporarily. Consequently, the voice prompts which have been generated either within the mobile terminal or within the network server can be loaded from the voice prompt database within the network server to a mobile terminal any time it is desired. Thus, a set of voice prompts has to generated only once for a plurality of mobile terminals.

The voice prompts can be used for generating an acoustic feedback upon recognition of a spoken utterance by the automatic speech recognizer of the mobile terminal. Therefore, the mobile terminal can further comprise components for outputting an acoustic feedback for a recognized utterance. The mobile terminal may further comprise components for outputting an visual feedback for a recognized utterance. The visual feedback can e. g. consist of displaying the textual transcription which corresponds to the recognized utterance.

According to a further embodiment of the invention, at least a part of the database for the textual transcriptions is arranged on a physical carrier which is removably connectable to the mobile terminal. The physical carrier can e. g. be a subscriber identity module (SIM) card which is also used for storing personal information. By means of the SIM card a mobile terminal can be personalized. The SIM card may comprise further databases at least partly like the mobile terminal's database for voice prompts or for acoustic models.

### BRIEF DESCRIPTION OF THE DRAWINGS

Further aspects and advantages of the invention will become apparent upon reading the following detailed description of preferred embodiments of the invention and upon reference to the figures, in which:
- Fig. 1: shows a schematic diagram of a first embodiment of a mobile terminal according to the invention;
- Fig. 2: shows a schematic diagram of the mobile terminal according to Fig. 1 in communication with a first embodiment of a network server according to the invention;
- Fig. 3: shows a schematic diagram of a second embodiment of a mobile terminal according to the invention;
- Fig. 4: shows a schematic diagram of a second embodiment of a network server according to the invention; and
- Fig. 5: shows a schematic diagram of a third embodiment of a network server according to the invention.

### DESCRIPTION OF PREFERRED EMBODIMENTS

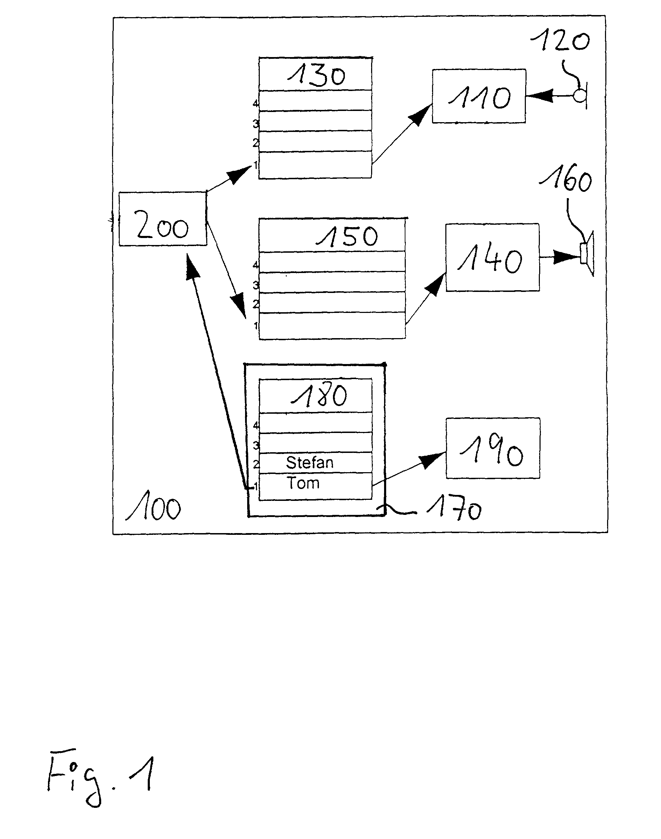

In Fig. 1 a schematic diagram of a first embodiment of a mobile terminal in the form of a mobile telephone 100 with voice dialing functionality according to the invention is illustrated.

The mobile telephone 100 comprises an automatic speech recognizer 110 which receives a signal corresponding to a spoken utterance of a user from a microphone 120. The automatic speech recognizer 110 is further in communication with a database 130 which contains all acoustic models to be compared for automatic speech recognition by the automatic speech recognizer 110 with the spoken utterances received via the microphone 120.

The mobile telephone 100 additionally comprises a component 140 for generating an acoustic feedback for a recognized spoken utterance. The component 140 for outputting the acoustic feedback is in communication with a voice prompt database 150 for storing voice prompts. The component 140 generates an acoustic feedback based on voice prompts contained in the database 150. The component 140 for outputting an acoustic feedback is further in communication with a loudspeaker 160 which plays back the acoustic feedback received from the component 140 for outputting the acoustic feedback.

The mobile telephone 100 depicted in Fig. 1 also comprises a SIM card 170 on which a further database 180 for storing textual transcriptions is arranged. The SIM card 170 is removably connected to the mobile telephone 110 and contains a list with several textual transcriptions of spoken utterances to be recognized by the automatic speech recognizer 110. In the exemplary embodiment depicted in Fig. 1, the database 180 is configured as a telephone book and contains a plurality of telephone book entries in the form of names which are each associated with a specific telephone number. As can be seen from the drawing, the first telephone book entry relates to the name "Tom" and the second telephone book entry relates to the name "Stefan". The textual transcriptions of the database 180 are configured as ASCII character strings. Thus, the textual transcription of the first telephone book entry consists of the three characters "T", "O" and "M". As can be seen from Fig. 1, each textual transcription of the database 180 has an unique index. The textual transcription "Tom", e. g., has the index "1".

The database 180 for storing the textual transcriptions is in communication with a component 190 for outputting an optic feedback. The component 190 for outputting the visual feedback is configured to display the textual transcription of a spoken utterance recognized by the automatic recognizer 110.

The three databases 130, 150, 180 of the mobile telephone 100 are in communication with an interface 200 of the mobile telephone 100. The interface 200 serves for transmitting the textual transcriptions contained in the database 180 to a network server and for receiving from the network server an acoustic model as well as a voice prompt for each textual transcription transmitted to the network server.

Basically, the interface 200 in the mobile telephone 100 can be separated internally into two blocks not shown in Fig. 1. A first block is responsible to access in a read and write mode the acoustic model database 130, the voice prompt database 150 and the textual transcription database 180. The second block realizes the transmission of the data comprised within the databases 130, 150, 180 to the network server 300 using a protocol description which guarantees a lossfree and fast transmission of the data. Another requirement on such a protocol is a certain level of security. Furthermore the protocol should be designed in such a way that it is independent from the underlying physical transmission medium, such as e.g. infraread (IR), Bluetooth, GSM, etc. Generally any kind of protocol (proprietary or standardized) fulfilling the above requirements could be used. An example for an appropriate protocol is the recently released SyncML protocol which synchronizes information stored on two devices even when the connectivity is not guaranteed. Such a protocol would meet the necessary requirements to exchange voice prompts, acoustic models, etc. for speech driven applications in any mobile terminal.

Each textual transcription is transmitted from the mobile telephone 100 to the network server together with the corresponding index of the textual transcription. Also, each acoustical model and each voice prompt are transmitted from the network server to the mobile telephone 100 together with the index of the corresponding textual transcription. The speaker independent references as well as the acoustical models received from the network server are stored in the corresponding databases 130 and 150 together with their indices. Each index of the three databases 130, 150, 180 can be interpreted as a link between a textual transcription, its corresponding acoustical model and its corresponding voice prompt.

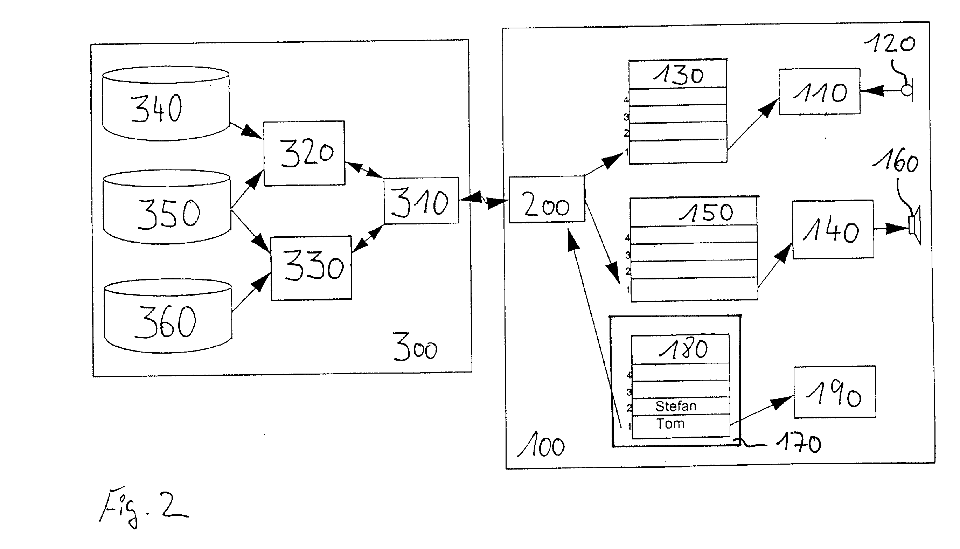

In Fig. 2, a network system comprising the mobile telephone 100 depicted in Fig. 1 and a network server 300 is illustrated. The network server 300 is configured to communicate with a plurality of mobile telephones 100. However, only one mobile telephone 100 is exemplarily shown in Fig. 2.

The network server 300 depicted in Fig. 2 comprises an interface 310 for receiving the textual transcriptions from the mobile terminal 100 and for transmitting the corresponding acoustic model and the corresponding voice prompt to the mobile telephone 100. Similar to the interface 200 in the mobile telephone 100, the interface 310 is structured in two blocks, a protocol driver block towards the e.g. wireless connection and an access block which transfers data to locations like databases, processing means etc. in the network server 300. The blocks are not shown in Fig. 2.

The interface 310 of the network server 300 is in communication with a unit 320 for providing acoustic models and a speech synthesizer 330. The unit 320 receives input from a recognition database 340 containing phonetic recognition units and a pronunciation database 350 containing phonetic transcription units. The speech synthesizer 330 receives input from the pronunciation database 350 and a synthesis database 360 containing phonetic synthesizing units.

Next, the generation of a speaker independent acoustic model for a textual transcription contained in the database 180 of the mobile telephone 100 is described. This process and other processes performed by the mobile telephone 100 are controlled by a central controlling unit not depicted in the Figures.

In the following it is assumed that a user has bought a new mobile telephone 100 with an empty database 130 for acoustic models and an empty database 150 for voice prompts. The user already disposes of a SIM card 170 with a database 180 containing indexed textual transcriptions like "Tom" and "Stefan". The SIM card 170 further comprises a database containing indexed telephone numbers relating to the textual transcriptions contained in the database 170.

The database containing the telephone numbers is not depicted in the drawing.

When the user inserts the SIM card 170 for the first time into the newly bought mobile telephone 100, at least the database 130 for acoustic models has to be filled in order to allow the user to set up a call by uttering one of the names contained in the database 180 for textual transcriptions. Thus, in a first step, the mobile telephone 100 transmits the textual transcriptions contained in the database 180 via the interface 200 to the network server 300. The connection between the mobile telephone 100 and the network server 300 is either wireless connection operated e. g. according to a GSM, a UMTS, a blue-tooth standard or an IR standard or a wired connection.

The unit 320 for providing reference models and the speech synthesizer 330 of the network server 300 receive the indexed textual transcriptions via the interface 310. The unit 320 then translates each textual transcription into its phonetic transcription. The phonetic transcription consists of a sequence of phonetic transcription units like phonems or triphons. The phonetic transcription units are loaded into the unit 320 from the pronunciation database 350.

Based on the sequence of phonetic transcription units corresponding to a specific textual transcription, the unit 320 then generates a speaker dependent or speaker independent acoustic model corresponding to that textual transcription. This is done by translating each phonetic transcription unit of the sequence of phonetic transcription units into its corresponding speaker dependent or speaker independent phonetic recognition units. The phonetic recognition units are contained in the recognition database 340 in a form that can be analyzed by the automatic speech recognizer 110 of the mobile telephone 100, e. g., in the form of feature vectors. An acoustic model is thus generated by concatenation of a plurality of phonetic recognition units in accordance with the sequence of phonetic transcription units.

Concurrently with the generation of an acoustic model, the speech synthesizer 330 generates a voice prompt for each textual transcription received from the mobile telephone 100. First of all, the speech synthesizer 330 generates a phonetic transcription of each textual transcription. This is done in the same manner as explained above in context with the unit 320 for providing acoustic models. Moreover, the same pronunciation database 350 is used. Due to the fact that the pronunciation database 350 is used both for generating the acoustic models and the voice prompts, synthesis errors during the creation of voice prompts can be avoided. If, e. g., the German word "Bibelried" is synthesized with two vowels "i" and "e" in "Bibel" instead of a long "i", this could immediately be heard by the user and corrected.

Based on the sequence of phonetic transcription units which constitutes the phonetic transcription, the speech synthesizer 330 generates a voice prompt by loading for each phonetic transcription unit comprised in the sequence of transcription units the corresponding phonetic synthesizing unit from the synthesis database 360. The thus obtained phonetic synthesizing units are then concatenated to the voice prompt of a textual transcription.

During the creation of the acoustic model and the voice prompt, each acoustic model and each voice prompt is provided with the index of the corresponding textual transcription. The indexed speaker independent acoustic model and the indexed voice prompts are then transmitted to the mobile telephone 100 via the interface 310 of the network server 300. Within the mobile telephone 100 the indexed speaker independent acoustic models and indexed voice prompts are received via the interface 200 and are loaded in the corresponding databases 130, 150. Thus, the database 130 for the acoustic models and the database 150 for the voice prompts are filled.

After the database 130 for acoustic models and the database 150 for voice prompts have been filled, a telephone call can be set up by means of a spoken utterance. To set up a call, a user has to speak an utterance corresponding to a textual transcription contained in the database 180, e. g. "Stefan". This spoken utterance is converted by the microphone 120 into a signal which is fed into the automatic speech recognizer 110.

As pointed out above, the acoustic models are stored in the database 130 as a sequence of feature vectors. The automatic speech recognizer 110 analyzes the signal from the microphone 120 corresponding to the spoken utterance in order to obtain the feature vectors thereof. This process is called feature extraction. In order to generate a recognition result, the automatic speech recognizer 110 matches the reference vectors of the spoken utterance "Stefan" with the reference vectors stored in the database 130 for each textual transcription. Thus, pattern matching takes place.

Since the database 130 contains an acoustic model corresponding to the spoken utterance "Stefan", a recognition result in the form of the index "2", which corresponds to the textual transcription "Stefan", is output from the automatic speech recognizer 110 to both the component 140 for outputting an acoustic feedback and the component 190 for outputting a visual feedback.

The component 140 for outputting an acoustic feedback loads the voice prompt corresponding to the index "2" from the database 150 and generates an acoustic feedback corresponding to the synthesized word "Stefan". The acoustic feedback is played back by the loudspeaker 160.

Concurrently, the component 190 for outputting a visual feedback loads the textual transcription corresponding to the index "2" from the database 180 and outputs a visual feedback by displaying the character sequence "Stefan".

The user may now confirm the acoustic and visual feedback and a call may be set up based on the telephone number which has the index "2". The acoustic and the visual feedback can be confirmed e. g. by pressing a confirmation key of the mobile telephone 100 or by speaking a further utterance relating to a confirmation command word like "yes" or "call". Acoustic models and voice prompts for the confirmation command word and for other command words can be generated in the same manner as described above in respect to creating speaker dependent and speaker independent acoustic models and as will be described bellow in respect to creating speaker dependent acoustic models.

According to a further variant of the invention, the voice prompts stored in the database 150 are not generated by the network server 300 but within the mobile telephone 100. The computational and memory resources of the network server 300 can thus be considerably decreased since the speech synthesizer 330 and the synthesis database 360 can be omitted.

A voice prompt for a specific textual transcription can be generated within the mobile telephone 100 based on a spoken utterance recognized by the automatic speech recognizer 110. Preferably, the first recognized utterance corresponding to the specific textual transcription is used for generating the corresponding voice prompt for the database 150. A voice prompt generated for a specific textual transcription is permanently stored in the database 150 for voice prompts only if the automatic speech recognizer 110 can find a corresponding acoustic model and if the user confirms this recognition result e.g. by setting up a call. Otherwise, the voice prompt is discarded.

Due to the fact that all language and country dependent components like the pronunciation database 350, the recognition database 340 and the synthesis database 360 may be provided on the side of the network server 300, in the case of speaker independent acoustic models the mobile telephone 100 can be kept language and country independent.

According to a variant not depicted in Fig. 2, the network server 300 comprises a plurality of pronunciation databases, recognition databases and synthesis databases, each database being language specific. A user of the mobile telephone 100 may select a specific language code within the mobile telephone 100. This language code is transmitted together with the textual transcriptions to the network server 300 which can thus generate language dependent and speaker independent acoustic models and voice prompts based on the language code received from the mobile telephone 100. Also, the language code received by the network server 300 may be used to download language specific acoustic or visual user guidances from the network server 300 to the mobile 100. The user guidance may e.g. inform a user how to operate the mobile telephone 100.

In the embodiment of a mobile telephone 100 and a network server 300 described above with reference to Figs. 1 and 2, the acoustic models have been generated by the network server 300 in a speaker dependent or speaker independent manner and the voice prompts have been either synthesized speaker independently within the network server 300 or recorded speaker dependently within the mobile telephone 100. Of course, the database 130 for acoustic models may also comprise both speaker independent and speaker dependent acoustic models. Speaker independent acoustic models may e.g. be generated by the network server 300 or be pre-defined and pre-stored in the mobile telephone 100.

Speaker dependent acoustic models may be generated as will be described below in more detail. Also, the database 150 for voice prompts may comprise both speaker independent voice prompts generated e.g. within the network server 300 and speaker dependent voice prompts generated using the first recognized utterance corresponding to a specific textual transcription as described above. Moreover, one or both of the databases 340 and 350 of the network server 300 can be configured as speaker dependent databases.

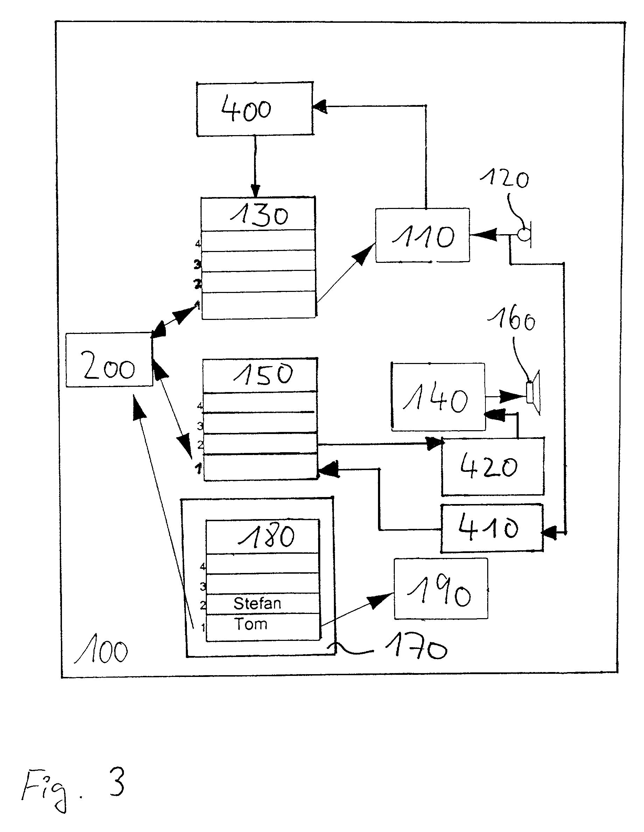

In Fig. 3, a second embodiment of a mobile telephone 100 according to the invention is illustrated. The mobile telephone 100 depicted in Fig. 3 has a similar construction like the mobile telephone 100 depicted in Fig. 1. Again, the mobile telephone 100 comprises an interface 200 for communicating with a network server.

In contrast to the mobile telephone 100 depicted in Fig. 1, however, the mobile telephone 100 depicted in Fig. 3 further comprises a training unit 400 in communication with both the automatic speech recognizer 110 and the database 130 for acoustic models. Moreover, the mobile telephone 100 of Fig. 3 comprises a coding unit 410 in communication with both the microphone 120 and the database 150 for voice prompts and a decoding unit 420 in communication with both the database 150 for voice prompts and the component 140 for generating an acoustic feedback.

The training unit 400 and the coding unit 410 of the mobile telephone 100 depicted in Fig. 3 are controlled by a central controlling unit not depicted in Fig. 3 to create speaker dependent acoustic models and speaker dependent voice prompts as follows.

The mobile telephone 100 is controlled such that a user is prompted to utter each keyword like each proper name or each command word to be used for voice controlling the mobile telephone 100 one or several times. The automatic speech recognizer 100 inputs each training utterance to the training unit 400 which works as a voice activity detector suppressing silence or noise intervals at the beginning and at the end of each utterance. The thus filtered utterance is then acoustically output to the user for confirmation. If the user confirms the filtered utterance, the training unit 400 stores a corresponding speaker dependent acoustic model in the database 130 for acoustic models in the form of a sequence of reference vectors.

For each keyword to be trained, one training utterance selected by the user is input from the microphone 120 to the coding unit 410 for coding this utterance in accordance with a format that allocates few memory resources in the database 150 for voice prompts. The utterance is then stored in the database 150 for voice prompts. Thus, the voice prompt database 150 is filled with speaker dependent voice prompts. When a voice prompt is to be played back, a coded voice prompt loaded from the database 150 is decoded by the decoding unit 420 and passed on in a decoded format to the component 140 for generating an acoustic feedback.

Once the database 130 for acoustic models and the database 150 for voice prompts have been filled, the mobile telephone 100 depicted in Fig. 3 can be controlled by spoken utterances as described above in context with the mobile telephone 100 depicted in Fig. 1.

Usually, the lifecycle of a mobile telephone 100 is rather short. If a user buys a new mobile telephone, he usually simply removes the SIM card 170 with the database 180 for textual transcriptions from the old mobile telephone and inserts it into the new mobile telephone. Thus, the textual transcriptions, e.g. a telephone book, are immediately available in the new mobile telephone. However, the database 130 for acoustic models and the database 150 for voice prompts remain empty.

In the prior art, the user thus has to repeat the same time consuming training process he already encountered with the old mobile telephone in order to fill the database 130 for acoustic models and the database 150 for voice prompts. However, according to the invention, the time consuming training process for filling the databases 130, 150 can be omitted. This is due to the provision of the interface 200 for transmitting contents of the database 130 for acoustic models and the database 150 for voice prompts to a network server and for receiving the corresponding contents from the network server later on.

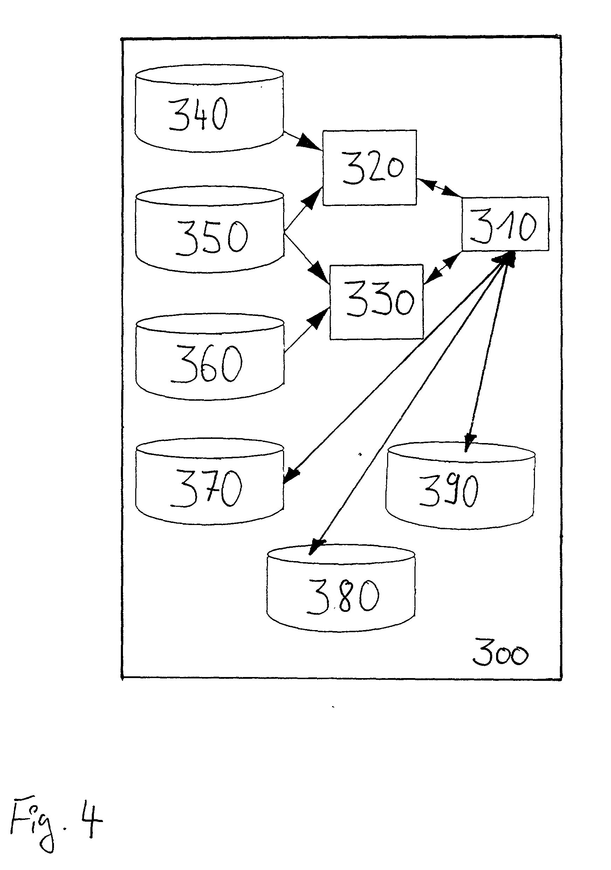

A network server 300 configured to communicate with the mobile telephone 100 depicted in Fig. 3 is illustrated in Fig. 4. The network server 300 of Fig. 4 processes the same components and the same functionality like the network server 300 of Fig. 2. Additionally, the network server 300 of Fig. 4 comprises three databases 370, 380, 390 in communication with the interface 310. The database 370 works as a unit for providing acoustic models and is adapted to temporarily store acoustic models. The database 380 is adapted to temporarily store voice prompts and the database 390 is adapted to temporarily store textual transcriptions.

The function of a network system comprising the mobile telephone 100 depicted in Fig. 3 and the network server 300 depicted in Fig. 4 is as follows.

After the database 130 for acoustic models and the database 150 for voice prompts of the mobile telephone 100 have been filled with speaker dependent acoustic models and speaker dependent voice prompts, the user of the mobile telephone 100 initiates a transfer process upon which the speaker dependent acoustic models and the speaker dependent voice prompts generated within the mobile terminal 100 are transferred by means of the interface 200 to the network server 300.

The acoustic models and the voice prompts from the mobile terminal 100 are received from the network server 300 via the interface 310. Thereafter, the received acoustic models are stored in the database 370 and the received voice prompts are stored in the database 380 of the network server 300. Again, as already mentioned in context with the network system depicted in Fig. 2, the acoustic models and the voice prompts are transmitted from the mobile telephone 100 together with their respective indices and are stored in the databases 370, 380 of the network server 300 in an indexed manner. This allows to assign each acoustic model and each voice prompt stored in the network server 300 a corresponding textual transcription later on.

If the user now buys a new mobile telephone 100 and inserts the SIM card 170 with the database 180 containing indexed textual transcriptions in the new mobile telephone 100, the database 130 for acoustic models and the database 150 for voice prompts will first be empty. However, the user of the new mobile telephone 100 may initiate a transfer process upon which the empty database 130 for acoustic models and the empty database 150 for voice prompts are filled with the indexed contents of the corresponding databases 370 and 380 in the network server 300. Thus, the indexed acoustic models in the database 370 for acoustic models and the indexed voice prompts in the database 380 for voice prompts are transmitted from the interface 310 of the network server to the new mobile terminal 100 and transferred via the interface 200 of the mobile terminal 100 into the corresponding databases 130, 150 of the mobile terminal 100. The time consuming process of newly training speaker dependent acoustic models and speaker dependent voice prompts for a new mobile telephone can thus be omitted if the training process has been conducted for the old mobile telephone.

According to a variant of the network system comprising the mobile telephone 100 of Fig. 3 and the network server 300 of Fig. 4, the textual transcriptions of the database 180 for textual transcriptions of the mobile telephone 100 can likewise be transferred from the mobile telephone 100 to the network server 300 and stored at least temporarily in the further database 390 for textual transcriptions of the network server 300. Consequently, if a user buys a new mobile telephone with a new SIM card 170, i.e., with a SIM card 170 having an empty database 180 for textual transcriptions, the user need not to create the database 180 for textual transcriptions anew. He may simply fill the database 180 for textual transcriptions of the mobile telephone 100 with the contents of the corresponding database 390 of the network server 300 as outlined above.

The network server 300 depicted in Fig. 4 can be used both with the mobile terminal 100 of Fig. 1 which preferably operates based on speaker independent acoustic models as well as with the mobile terminal 100 of Fig. 3 which is configured to operate with speaker dependent acoustic models. Of course, the network server 300 of Fig. 4 may also be configured such that it may only be used with the mobile telephone 100 of Fig. 3. Thus, the complexity of the network server 300 can be drastically decreased. In order to operate with the mobile terminal 100 depicted in Fig. 3, the network server 300 of Fig. 4 need not comprise all the databases 370, 380, 390 for storing the acoustic models, the voice prompts, and the textual transcriptions, respectively. Preferably, the network server 300 comprises at least the database 370 for acoustic models.

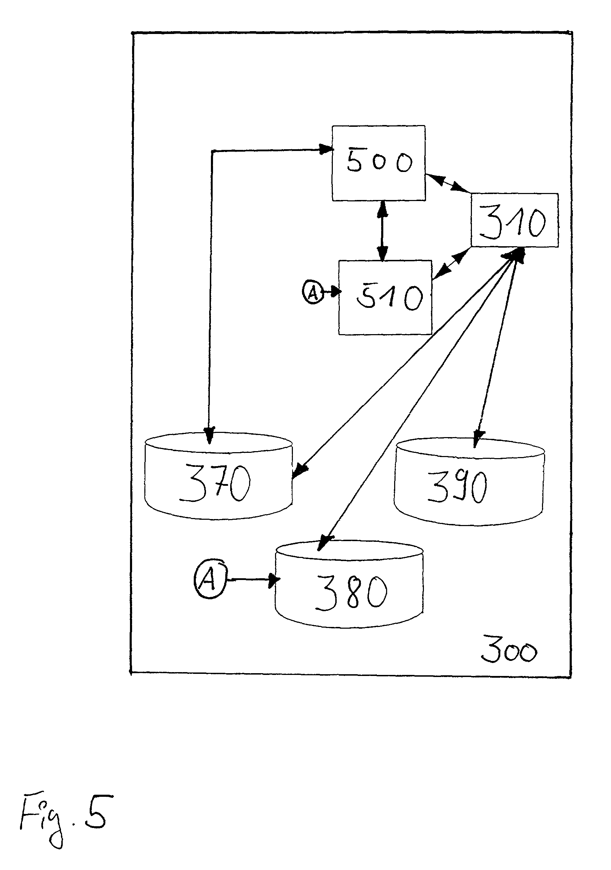

A third embodiment of a network server 300 according to the invention is depicted in Fig. 5. The network server 300 depicted in Fig. 5 allows name dialing even with telephones which have no name dialing capability. Hereinafter, such a type of telephone is called POTS (Plain Old Telephone System). With such a POTS telephone, the user simply dials into the network server 300 via the interface 310. The connection between the POTS telephone and the network server 300 may be a wired or a wireless connection.

The network server 300 depicted in Fig. 4 comprises three databases 370, 380, 390 with the same functionality as the corresponding databases of the network server 300 depicted in Fig. 4. The network server 300 of Fig. 5 further comprises an automatic speech recognizer 500 in communication with both the interface 310 and the database 370 for acoustic models and a speech output system 510 in communication with the database 380 for voice prompts. The databases 370 and 380 of the network server 300 have been filled with acoustic models and voice prompts as described above in context with the network server 300 of Fig. 4.

If a user now dials with a POTS telephone into the network server 300 depicted in Fig. 5, he has full name dialing capabilities. A spoken utterance of the user may be recognized by the automatic speech recognizer 500 based on the acoustic models comprised in the database 370 for acoustic models which constitutes the automatic speech recognizer's 500 vocabulary. In case a matching indexed acoustic model is found by the automatic speech recognizer 500, the speech output system 510 loads the correspondingly indexed voice prompt from the database 380 and outputs this voice prompt via the interface 310 to the POTS telephone. If the user acknowledges that the voice prompt is correct, a call may be set up based on the indexed telephone number which corresponds to the voice prompt and which is stored in the database 390 for textual transcriptions.

Preferably, if used with a POTS telephone, the network server 300 is configured as a backup network server which performs a backup of one or more of a mobile telephone's databases in regular time intervals. It is thus ensured that a user of a POTS telephone has always access to the most recent content of a mobile telephone's databases.

According to a further variant of the invention, the POTS telephone can be used for training the network server 300 in regard to the creation of e.g. speaker dependent acoustic models or speaker dependent voice prompts which are to be stored in the corresponding databases 370, 380.

## Claims

1. A mobile terminal (100) controllable by spoken utterances, comprising:
- an interface (200) for receiving from a network server (300) acoustic models corresponding to the spoken utterances; and
- an automatic speech recognizer (110) for recognizing the spoken utterances based on the received acoustic models.

2. The mobile terminal according to claim 1, further comprising at least one of a database (130) for the acoustic models and a database (180) for textual transcriptions of the spoken utterances.

3. The mobile terminal according to claim 1 or 2, wherein the interface (200) allows to transmit the textual transcriptions to the network server (300).

4. The mobile terminal according to one of claims 1 to 3, further comprising components (140, 190) for outputting at least one of an acoustic and visual feedback for a spoken utterance recognized by the automatic speech recognizer.

5. The mobile terminal according to one of claims 1 to 4, further comprising a database (150) for voice prompts.

6. The mobile terminal according to one of claims 2 to 5,
wherein at least the database (130) for textual transcriptions is arranged on a physical carrier (170) which is removably connectable to the mobile terminal (100).

7. The mobile terminal according to claim 6,
wherein the physical carrier (170) is a SIM card.

8. The mobile terminal according to one of claims 1 to 7, wherein the acoustic models are speaker independent acoustic models.

9. The mobile terminal according to one of claims 1 to 8, wherein the interface (200) allows to transmit acoustic models of the spoken utterances to the network server (300).

10. The mobile terminal according to one of claims 1 to 9, wherein the interface (200) allows to transmit voice prompts corresponding to the spoken utterances to the network server (300).

11. A network server (300) for mobile terminals (100) which are controllable by spoken utterances, comprising:
- a unit (320, 370) for providing acoustic models for automatic recognition of the spoken utterances; and
- an interface (310) for transmitting the acoustic models to the mobile terminals (100).

12. The network server according to claim 11, wherein the interface (310) allows to receive textual transcriptions of the spoken utterances from the mobile terminals (100) and wherein the unit (320) for providing acoustic models generates acoustic models based on the received textual transcriptions.

13. The network server according to claim 11 or 12, further comprising a pronunciation database (350) containing phonetic transcription units.

14. The network server according to one of claim 11 to 13, further comprising a recognition database (340) containing phonetic recognition units.

15. The network server according to one of claims 11 to 14, further comprising a speech synthesizer (330).

16. The network server according to one of claims 13 to 15, wherein the pronunciation database (350) is shared by both the unit (320) for generating acoustic models and the speech synthesizer (330).

17. The network server according to one of claims 15 or 16, further comprising a synthesis database (360) containing phonetic synthesizing units.

18. The network server according to one of claims 11 to 17,
wherein the interface (310) allows to receive acoustic models of the spoken utterances from a mobile terminal (100) and wherein the unit (370) for providing acoustic models stores the received acoustic models at least temporarily.

19. The network server according to one of claims 11 to 18,
wherein the interface (310) allows to receive and transmit voice prompts corresponding to the spoken utterances from the mobile terminals (100) and further comprising a voice prompt database (380) for storing the voice prompts.

20. A method for obtaining acoustic models for automatic speech recognition in a mobile terminal (100) controllable by spoken utterances, comprising:
- providing acoustic models by a network server (300);
- transmitting the acoustic models from the network server (300) to the mobile terminal (100); and
- automatically recognizing the spoken utterances within the mobile terminal (100) based on the acoustic models transmitted by the network server (300).

21. The method according to claim 20, further comprising transmitting textual transcriptions of the spoken utterances from the mobile terminal (100) to the network server (300) and generating the acoustic models based on the transmitted textual transcriptions in the network server (300).

22. The method according to claim 21, wherein the acoustic models are generated based on phonetic transcriptions of the textual transcriptions.

23. The method according to one of claims 20 or 22, further comprising generating voice prompts.

24. The method according to claim 23, wherein the voice prompts are generated by the network server (300) based on the same phonetic transcriptions used for creating the speaker independent acoustic models.

25. The method according to claim 23, wherein the voice prompts are generated by the mobile terminal (100) based on recognized spoken utterances.

26. The method according to one of claims 20 to 25, further comprising transmitting acoustic models from the mobile terminal (100) to the network server (300) and storing the transmitted acoustic models at least temporarily in the network server (300).
